# EUROPEAN PATENT APPLICATION

(11) **EP 2 267 558 A1**
(43) Date of publication of application: **29.12.2010**
(21) Application number: 08873692.1
(22) Date of filing: 24.09.2008
(51) Int. Cl.: G03H 1/22

(54) **IMAGE VISUALISATION METHOD AND DEVICE FOR CARRYING OUT SAID METHOD**

(30) Priority: 03.04.2008 RU 2008112738
(71) Applicant: Adzhalov, Vladimir Isfandeyarovich, Moscow, 127055 (RU)
(72) Inventor: Adzhalov, Vladimir Isfandeyarovich, Moscow, 127055 (RU)
(74) Representative: Einsel, Martin
(86) International application number: PCT/RU2008/000618
(87) International publication number: WO 2009/123500

(57) **Abstract**

The invention relates to information technologies and is intended for visualizing three-dimensional images. The technical result of the invention consists in creating electrically controlled three-dimensional phase diffraction gratings and, on their basis, screens for displaying three-dimensional color images. A method for visualizing images comprises directing a beam of broadband optical radiation at a matrix of electrically controlled elements, or pixels, the pixels being supplied with a voltage, its distribution over the matrix being calculated so as to produce a desired change in the current optical characteristics of the pixels, and viewing the image. Moreover, the beam of optical radiation is directed simultaneously at a stack of pixel matrixes in which the matrixes are arranged parallel to one another, the matrixes being irradiated from the side from which the image is viewed, the refraction index being used as a variable optical characteristic of pixels in all the matrixes. The device for performing the claimed method comprises a screen that is a multi-layered structure made of materials transparent to electromagnetic radiation within the optical range, the multi-layered structure comprising alternating layers of material displaying an electro-optical effect and layers of a transparent material that does not display an electro-optical effect, all the layers displaying an electro-optical effect being insulated electrically from one another and each of them being made as a matrix of electrically controlled elements, or pixels.

## Description

### FIELD OF THE INVENTION

The invention relates to information technologies, and in particular to methods and devices for imaging video information, and is intended for visualizing three-dimensional images.

### BACKGROUND OF THE INVENTION

Methods and devices known in prior art for visualizing dynamically changing stereoscopic (three-dimensional) images are based on various modifications of the stereo effect (*see,* for example: V.A. Ezhov et al., Patent RU No. 2,306,678, C1, priority date February 7, 2006, and V.S. Petrov et al., Patent RU No. 2,189,619, C1, priority date January 10, 2001).

The main disadvantages of these and similar methods and devices for performing the same are inconvenience of viewing and significant distortions in the transmission of three-dimensional images.

Also known in prior art are methods for recording three-dimensional phase holograms and devices for performing the same (*see,* for example: V.I. Sukhanov et al., Patent RU No. 2,168,707, C2, priority date September 19, 1997).

The major disadvantages of these and similar methods and devices for performing the same are that they are unsuitable for visualizing dynamically changing images.

In respect of the technical idea, the closest prior art of the claimed method is a method for visualizing images wherein a beam of broadband optical radiation is directed at a matrix of electrically controlled elements (pixels) and, at the same time, the pixels are supplied with a voltage distribution calculated so as to cause desired changes in the current optical characteristics of the pixels for an image to the viewed (*see,* for example: E.S. Dunyashev et al., Patent RU No. 2,256,206, C1, priority date August 9, 2004). The method consists in projecting an image produced by an electrically controlled two-dimensional matrix on to an external screen.

From the viewpoint of the technical idea, the closest prior art of the claimed device for performing the claimed method is a screen for visualizing images that is a multi-layered device manufactured from materials transparent to optical range electromagnetic radiation (*see*: V.I. Kozlovsky and A.A. Kolchin, Patent RU No. 2,064,206, C1, priority date December 26, 1991).

The closest prior art device is a cathode ray tube screen and is used subsequently to display information on a large external screen.

The principal disadvantages of the technical solutions - the prior art method and prior art device - closest to the claimed inventions are that they are unsuitable for visualizing three-dimensional images.

### SUMMARY OF THE INVENTION

The technical result of the invention consists in enabling visualization of static and dynamic three-dimensional color images by creating synthesized three-dimensional holograms.

The invention can also be used to create electrically controlled three-dimensional phase diffraction gratings (synthesized holograms) and, on their basis, stationary displays, including screens for group audiences to view three-dimensional video films, and also screens for mobile devices, and screens formed on the windshields of motor vehicles, aircraft, and other man-controlled devices enabling visualization of three-dimensional color images, both static and dynamically changing images.

To attain the claimed objective yielding the desired technical result, the prior art method for visualizing images, wherein a beam of broadband optical radiation is projected on to a matrix of electrically controlled elements, or pixels, said pixels being supplied with a voltage, the distribution thereof over the matrix being calculated to make the desired change in the current optical characteristics of the pixels, for the image to the viewed, is used, according to the present invention, to direct a beam of optical radiation simultaneously on to a stack of pixel matrixes, wherein the matrixes are arranged parallel to one another, the matrixes being irradiated on the same side on which the image is viewed, the refraction index being used as a variable optical characteristic of pixels in all the matrixes.

Also, to attain the claimed objective and achieve the desired technical result, the prior art device for visualizing images comprising a screen that is a multi-layered structure made of materials transparent to optical range electromagnetic radiation, has, according to the claimed invention, a multi-layered structure that comprises alternating layers of material displaying an electro-optical effect and layers of a transparent material that does not display an electro-optical effect, all the layers that display an electro-optical effect being insulated electrically from one another, and each of them being made as a matrix of electrically controlled elements, or pixels.

Several embodiments developing the claimed method are claimed within the framework of the present invention.

In the first embodiment, the voltage supplied is calculated so as to change the refraction index in the pixels, said voltage corresponding to an interference picture of the hologram of images in the opposite beams discretized according to the number and location of the existing pixels.

The second embodiment uses pixels having sides of a size that does not exceed 128 nanometers in length, with the stack of matrixes having a total thickness of at least 2 micrometers arranged at a spacing that does not exceed 256 nanometers.

Embodiments (examples) of the claimed device for visualizing images are also claimed within the framework of the present invention.

In the first embodiment of the device, the multi-layered stack has a thickness of at least 2 micrometers and pixels having sides of a size that does not exceed 128 nanometers, the layers of material displaying an electro-optical effect being arranged in the multi-layered stack at a spacing that does not exceed 256 nanometers.

In the second embodiment, the device is further provided with at least one source of broadband optical radiation facing the screen on the outer side thereof.

In the third embodiment, all layers of material displaying an electro-optical effect are arranged in the multi-layered structure in a regular pattern, that is, at a constant spacing between the layers, the side of the pixels having a size that is equal to half the spacing between the layers.

In a further embodiment, the layers of material displaying an electro-optical effect are arranged within a multi-layered structure at a spacing within the range of 50 to 75 nanometers between the layers.

The invention also contains a further modification wherein the thickness of each layer of material displaying an electro-optical effect is equal to the size of the pixel side.

The invention further contains an additional modification wherein the thickness of layers of material displaying an electro-optical effect is within the range of 4 to 15 micrometers.

The idea of the claimed invention is as follows:
To attain the claimed objective, the inventor has actually developed a method for synthesizing dynamically controlled three-dimensional phase holograms and a device for performing the method.

### BRIEF DESCRIPTION OF THE DRAWINGS

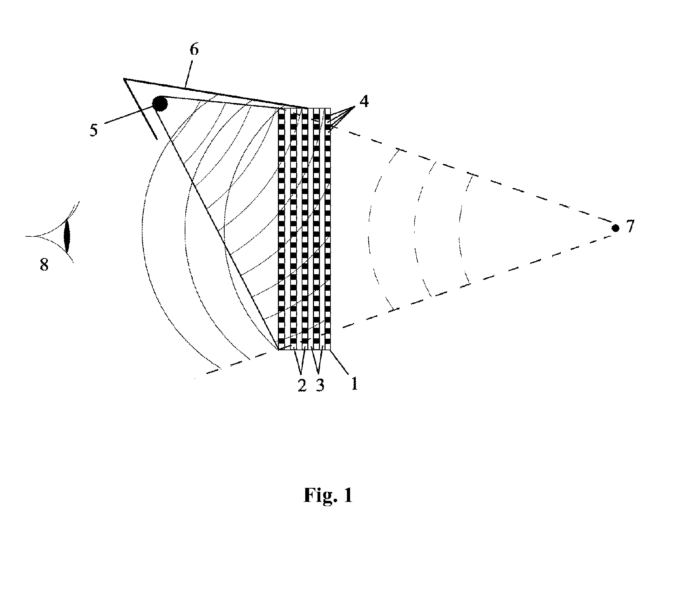

The group of the claimed inventions is illustrated in FIG. 1 that shows diagrammatically the claimed device for visualizing images.

### AN EMBODIMENT OF THE INVENTION

FIG. 1 illustrates a screen 1 that is a multi-layered structure containing alternating layers 2 of material displaying an electro-optical effect and layers 3 that are made of a material transparent to optical radiation and do not display an electro-optical effect, the layers displaying an electro-optical effect being insulated electrically from one another and each of them being made as a matrix of electrically controlled elements, or pixels 4. The drawing also shows a source 5 of broadband optical radiation facing the screen at the outer side of screen 1 (facing the viewer) and an element 6 to connect source 5 mechanically to the screen. For convenience of explaining the idea of the claimed inventions, the drawing also shows a restorable (viewable) point light source 7 (that is actually an element of any possible complex three-dimensional image) and the viewer's eye 8 protected against the direct radiation of broadband radiation source 5 by mechanical coupling element 6.

The device developed to perform the method operates as follows: Broadband radiation from source 5 (white light source) is directed at screen 1 consisting of alternating layers 2 and 3. The material used to produce synthesized dynamically changing holograms according to the claimed method is preferably any material that can be used to make a matrix of electrically controlled elements (pixels 4) wherein the refraction index is the electrically controlled optical parameter (variable optical characteristic). Accordingly, materials displaying a distinct electro-optical effect, in particular, gallium arsenide and lithium niobate, which are among the well-known materials of this type, can be used in the claimed device.

As a result, screen 1 of the device manufactured in accordance with the invention is a three-dimensional matrix of electrically controlled phase elements 4.

When such screen is irradiated from source 1 of broadband optical radiation (white light source), optical radiation is partially reflected as a result of diffraction on a three-dimensional interference phase grading consisting of pixels 4. When radiation reflected from the device enters human eye 8, it forms an image, for example, an image of point light source 7, for the viewer. A specific type of image depends on the control voltage distribution applied to the three-dimensional pixel matrix.

As is common knowledge, ordinary three-dimensional holograms are produced by photographic recording of an interference picture in opposite beams of two coherent waves - a so-called reference wave and a wave from the object to be recorded in a hologram. The spatial frequency of the resultant interference picture is measured by the convergence angle of the wave fronts and the wavelength of the radiation source used, being equal at its maximum to a half of the source wavelength.

If successfully recorded, the resultant three-dimensional picture may be used, in a reflection pattern, to reconstruct the image of the original object, in which case the broadband source (white light source) can be used as the reconstruction wave owing to the spectral selectivity of the resultant three-dimensional interference picture.

The claimed group of technical solutions is a result of research conducted to study the possibility of three-dimensional phase interference gratings similar to three-dimensional holograms being synthesized in opposite beams. A real distribution of the interference picture when it is recorded by classical holography methods (with the object exposed to a coherent beam or beams of light and an interference picture obtained in opposite beams) can be used as initial information about the three-dimensional interference grating to be synthesized. A calculated interference picture distribution can also be used as initial information about the three-dimensional interference grating to be synthesized. It is common knowledge that in the last-named case, each point of the object may be represented one-to-one in the form of the assumed interference picture distribution upon interaction between radiation from that point and the coherent radiation beam having a front corresponding to the front of a beam that is intended to be used to light up the synthesized hologram. Actually, the image of each object point to be restored may be represented one-to-one by a corresponding three-dimensional picture that is a three-dimensional picture of interference (a three-dimensional Fresnel zone picture) between a point radiation source and a reference wave.

It is to be noted that the description of possible methods of obtaining initial information about the distribution of an interference picture to be synthesized is added here to explain the idea of the invention, but it is not the subj ect matter hereof and is not essential for achieving the expected technical result. Similarly, a method of obtaining information about the distribution of voltages to be applied to the pixels to form an image is not essential for projecting video images in the prior art method and device.

To achieve an expected technical effect, it is important to enable synthesis of dynamically controlled three-dimensional phase structures similar in physical design to three-dimensional holograms in opposite beams.

The inventor has explored the possibility of such holograms being obtained as a stack of matrixes of electrically controlled elements. The inventor has found, as a result, that his own spatial analogue of the famous sampling theorem (Kotelnikov's theorem) can be used as a theoretical basis for synthesizing the desired structures. As is commonly known, to make time signals discrete, it is required, according to the sampling theorem to sample (discretize) a signal at a frequency that is at least twice as high as the highest spectral component of the signal being discretized. In respect of the objective to be achieved, the inventor justified theoretically, and later supported experimentally, an assumption that three-dimensional display of interference pictures is also subject to the rule of maximum discretization frequency. With the purpose of identifying this rule, any infinitely complex three-dimensional interference picture is to be regarded as superposition of independent sinusoidally variable spatial gratings on three coordinates, that is, in the form of a three-dimensional Fourier representation when the so-called spatial frequencies measured in units of a size reverse of the length unit are used as variables.

In a simple form, this rule can be formulated in the following terms: for discretization of a three-dimensional picture to be successful, it is required to use a spatial discretization step on each of the spatial coordinates at a spatial frequency exceeding a doubled maximum spatial frequency of the interference picture to be discretized in the projection of this picture on a respective coordinate.

The results of mathematical modeling performed by the inventor showed that, in respect of the task of visualizing images in the visible wavelength range (visible to the human eye), this indicates the need for electrically controlled matrix structures to be formed with a spacing between the layers that does not exceed 256 nanometers and a pixel in each matrix that does not exceed 128 nanometers in size. As the results of experimental studies have shown, the total thickness of a three-dimensional phase picture synthesized is to be at least 2 micrometers for the spectral selectivity effect to be retained.

If this structure is exposed to a beam of broadband optical radiation and a voltage distribution corresponding to the desired discretization picture of a calculated or recorded hologram is applied to the pixels, the viewer on the exposure side will see a restored image that changes dynamically in accordance with the speed and nature of the change in voltage distribution across the pixels.

The quality of an image restored by a hologram synthesized can be improved if a specified, rather than random, source of optical radiation is used for restoring the image. In the other embodiments of the claimed device, the device is further provided with a specified source of broadband radiation on the outer side (facing the viewer) of the screen. Understandably, the source is to be installed beyond the boundaries of the aperture (surface viewed) of the screen and be designed to be clear of the screen and prevent direct radiation from the source from being seen by the viewer's eyes. Moreover, any source installed has a specific radiation front that facilitates mathematical modeling.

Actually, in this specific embodiment, a picture of refraction index distribution corresponding to the discretized picture recording the interference result of a point source to be restored, with its coherent source positioned at the location of the restoring white light source, and having the same radiation front characteristics, is to be formed (by applying an appropriate voltage distribution) in the layers of material displaying an electro-optical effect, for visualizing the image of the point radiation source (in fact, an element of any complex image).

A study of possibilities for improving the quality of holograms synthesized by regularizing and further reducing discretization (spacing between the layers and pixel size) has shown that preference in performing the claimed method is to be given to an embodiment of the device in which the matrixes of electrically controlled elements in a multi-layered structure are arranged in a regular pattern, that is, at a constant spacing between the layers and with the size of a pixel side equal to half the spacing between the layers. It has been established experimentally (by mathematical modeling) that the preferred discretization size permitting an economically efficient balance to be maintained between the quality characteristics of images formed and requirements to micro-miniaturization needed to form synthesized three-dimensional images within the full range of the optical radiation spectrum observed within the entire screen aperture is achieved at a spacing of 50 to 75 nanometers between the matrixes of electrically controlled elements. It has also been found that the best quality characteristics of the images formed will be achieved by regular discretization on all coordinates, that is, at a thickness of each layer of material displaying an electro-optical effect, equal to the size of the pixel side.

Further research into the relationship between the quality of an image restored and the number of layers formed has shown that the preferred total thickness of layers displaying an electro-optical effect producing an economically efficient balance between the quality characteristics of images formed and micro-miniaturization requirements lies within the range of 4 to 15 micrometers.

The claimed method for visualizing images and the claimed device to perform the same are, therefore, up to the task set and help achieve expected technical results.

## Claims

1. A method for visualizing images comprising directing a beam of broadband optical radiation at a matrix of electrically controlled elements, or pixels, as voltage is applied to the pixels, the distribution of the voltage over the matrix being calculated to produce a desired change in the current optical characteristics of the pixels, and viewing the image, wherein the beam of optical radiation is directed simultaneously at a stack of pixel matrixes arranged parallel to one another, the matrixes being exposed to radiation on the side on which the image is viewed, the refraction index being used as a variable optical characteristic of pixels in all the matrixes.

2. The method as claimed in claim 1, wherein the voltage applied is calculated to produce a change in the refraction index in the pixels corresponding to the interference picture of the image hologram discretized according to the number and location of existing pixels in opposite beams.

3. The method as claimed in claim 1, wherein the pixels used have a pixel side of a size that does not exceed 128 nanometers, and the stack of matrixes has a total thickness of at least 2 micrometers and a spacing that does not exceed 256 nanometers.

4. A device for visualizing images having a screen that is a multi-layered structure made of materials transparent to electromagnetic radiation within the optical range, wherein the multi-layered structure comprises alternating layers of material displaying an electro-optical effect and layers of transparent material that do not display an electro-optical effect, all the layers displaying an electro-optical effect being insulated electrically from one another and each of them being designed as a matrix of electrically controlled elements, or pixels.

5. The device as claimed in claim 4, wherein the multi-layered structure has a thickness of at least 2 micrometers and the size of a pixel side does not exceed 128 nanometers, the layers of material displaying an electro-optical effect being arranged in the multi-layered structure at a spacing that does not exceed 256 nanometers.

6. The device as claimed in claim 4, which is further provided with at least one source of broadband optical radiation facing the screen and positioned at the outer side of the screen.

7. The device as claimed in claim 4, wherein all the layers of material displaying an electro-optical effect are arranged in the multi-layered structure in a regular pattern, that is, at a constant spacing between the layers, the size of the pixel side being equal to half the spacing between the layers.

8. The device as claimed in claim 4, wherein the layers of material displaying an electro-optical effect are arranged in the multi-layered structure at a spacing of 50 to 75 nanometers between the layers.

9. The device as claimed in claim 4, wherein the thickness of each layer of material displaying an electro-optical effect is equal to the size of a pixel side.

10. The device as claimed in claim 4, wherein the total thickness of the layers of material displaying an electro-optical effect lies within the range of 4 to 15 micrometers.
